# EUROPÄISCHE PATENTSCHRIFT

(11) **EP 0 496 088 B1**
(45) Veröffentlichungstag und Bekanntmachung des Hinweises auf die Patenterteilung: **03.05.1995**
(21) Anmeldenummer: 91121900.4
(22) Anmeldetag: 20.12.1991
(51) Int. Cl.: G01B 5/00

(54) **Verfahren zum Messen von Werkstücken**
Workpiece-measuring device
Procédé de mesure d'objets

(30) Priorität: 22.01.1991 DE 4101702; 06.03.1991 DE 4107077
(43) Veröffentlichungstag der Anmeldung: 29.07.1992
(73) Patentinhaber: Stell, Karl-Wilhelm, Dr.Dipl.-Ing., D-48703 Stadtlohn (DE)
(72) Erfinder: Stell, Karl-Wilhelm, Dr.Dipl.-Ing., D-48703 Stadtlohn (DE)
(74) Vertreter: Habbel, Hans-Georg, Dipl.-Ing.

(56) Entgegenhaltungen:
- DE-A- 2 011 346
- DE-A- 3 417 741
- DE-A- 3 738 165
- DE-C- 3 613 027
- US-A- 3 815 248

## Beschreibung

Die Erfindung bezieht sich auf ein Verfahren zum Messen von Werkstücken, die z. B. eine Bohrung oder einen Zapfen aufweisen oder als Welle od. dgl. ausgebildet sind und in einer Transportebene bewegt werden sowie auf eine Greif-Hubvorrichtung zur Verwendung bei der Durchführung dieses Verfahrens.

Präzisionswerkstücke, wie sie beispielsweise in der Fahrzeug- oder Flugzeugindustrie eingesetzt werden, unterliegen der Forderung nach 100 %iger Qualitätssicherheit. Wissenschaft und Industrie haben verschiedene Hilfsverfahren entwickelt, z. B. das statistische Prozeßkontrollverfahren. In der verarbeitenden Industrie werden damit z. B. die sich im Produktionsprozeß langsam verschleißenden Werkzeuge statistisch kontrolliert. Dieses Verfahren ist in vieler Hinsicht hilfreich, dennoch läßt sich damit allerdings ein wesentliches Problem nicht lösen.

Zur Material-, Energie- und Arbeitsersparnis werden immer mehr warm- oder kaltumgeformte, gegossene oder gespritzte Formteile zum Einsatz gebracht, die in der Regel einer zerspanenden Nachbearbeitung unterliegen und einzeln in einem Spannfutter gespannt werden müssen. Infolge der in der spanenden Fertigung anfallenden Späne und Stäube, die im Bearbeitungsraum umherfliegen oder auch aus anderen Zufallsgründen, passiert es immer wieder, daß einmalig oder mehrmalig Werkstücke fehlgespannt und demzufolge zu in der Statistik nicht vorhersehbaren Ausreißern werden. Da fertigungstechnisch diese Ausreißer nicht zu beseitigen sind, bleibt in der Praxis nur eine 100 %ige Kontrolle der Werkstücke und hierbei speziell die Kontrolle der durch Spannfehler entstehenden Werkstückfehler, wie die
a) der mangelnden Konzentrizität der verschiedenen Durchmesser,
b) dem "Nichtsenkrechtstehen" der Werkstückachse zur Planfläche und
c) der "Nichtplanparallelität" der Werkstückflachen.

Die bisher im Einsatz befindlichen Meßmaschinen nutzen für statische Messungen gewissermaßen das Verfahren des manuellen Messens eines Werkstückes mit Meßtisch und Meßstativ und haben dabei bezogen auf das jeweilige zu messende Werkstück unterschiedliche Transport-, Aufsetz- und Halteeinrichtungen, wobei letztere das Messen behindern können.

So ist aus der DE-34 17 741 A1 ein Verfahren zum Messen und wahlweise auch zum Bereitstellen von Werkstücken aus einer Bereitstellungsposition in eine Bearbeitungsposition einer Drehmaschine oder eines Bearbeitungszentrums bekannt. Das Messen des Werkstücks erfolgt dabei durch einen an das auf einem Meßtisch aufstehende Werkstück herangefahrenen Meßtaster, wobei anstelle des Meßtasters auch eine Greifeinrichtung vorgesehen werden kann, mit welcher ein Werkstück von einer Bereitstellungsposition in eine Arbeitsposition verbracht werden kann.

Aus der DE-37 38 165 A1 ist zwar ein Verfahren zum Umsetzen von Werkstücken entnehmbar, bei dem das Werkstück auf einem unteren Werkstückträger von Greifelementen, die von einem zweiten Werkstückträger getragen werden, ergriffen und drehfest an dem oberen Werkstückträger festgelegt wird und bei dem das Werkstück von dem oberen Werkstückträger aus dem unteren Werkstückträger in den Raum gehoben wird. Hierbei handelt es sich aber nicht um ein Meßverfahren.

Das dynamische Messen, das erforderlich ist, um die Konzentrizität und das Senkrechtstehen der Werkstückachse auf der oder den Planflächen zu prüfen und das auch zum Messen der Planparallelität der Flächen dient, verlangt einen zusätzlichen hohen maschinellen Aufwand in Form von mechanischen Zentriervorrichtungen und von Drehtellern mit mitgegeführten Halteeinrichtungen.

Alle maschinellen, zum Stand der Technik gehörenden Einrichtungen sind deshalb sehr kostenintensiv und müssen für das zu messende Werkstück einzeln angepaßt konstruiert werden.

Der Erfindung liegt die Aufgabe zugrunde, ein Meßverfahren für das Vermessen von Werkstücken - und Greif-Hubvorrichtungen zur Verwendung bei der Durchführung dieses Verfahrens - zu schaffen, das zum einen wesentlich kostengünstiger ist und das zum andern in der Lage ist, auch schnell auf unterschiedliche Werkstücke umgerüstet zu werden.

Diese der Erfindung zugrundeliegende Aufgabe wird bezüglich des Meßverfahrens durch die Lehre des Hauptanspruches gelöst.

Vorteilhafte Ausgestaltungen sind in den Unteransprüchen 2 bis 7 erläutert.

Greif-Hubvorrichtungen zur Verwendung bei der Durchführung des erfindungsgemäßen Verfahrens sind in den Vorrichtungsansprüchen erläutert.

Aus der DE-36 13 027 C1 ist es bekannt, Vorgänge zur Entnahme und Rückgabe von Werkstücken gesteuert durchzuführen. Auch diese bekannte Einrichtung legt die erfindungsgemäße Greif-Hubvorrichtung zur Verwendung bei der Durchführung des erfindungsgemäßen Verfahrens nicht nahe.

Mit anderen Worten ausgedrückt werden die Vorgänge des konventionellen Meßverfahrens, bei dem das zu messende Werkstück auf einen Meßtisch gelegt, mit Spannelementen dort gehalten und mittels herangeführter Meßgeräte vermessen wird - dieses Verfahren wird auch für die Arbeitsgänge des konventionellen automatischen Vermessens von Werkstücken in Meßmaschinen im Prinzip beibehalten - verlassen, zugunsten des erfindungsgemäßen Meßverfahrens mit vollständig veränderten Bedingungen.

Zunächst einmal werden entsprechend dem Hauptanspruch mittels einer drehbaren Hubvorrichtung die Höhe der Meßebene nun variierbar, und zwar generell, d. h. in verschiedenen Ebenen und Winkelpositionen, die entweder (im NC Programm) vorgegeben sind, oder die bei Durchführung des Meßverfahrens erst coaktiv ermittelt werden müssen.

Das ist z. B. notwendig, wenn sich bei einem Werkstück die Maße von der Mitte her aufbauen, insbesondere dann, wenn die Bezugsebene und ein Durchmesser-Paßmaß mit nur geringer Höhendimension (< = 1 mm) zum Messen zur Verfügung steht, ist die im Meßprozeß selbsttätige Ermittlung der exakten Meßbezugsebene von großer Bedeutung.

Das so in Meßebene und Winkelposition festgelegte, zu vermessende Werkstück kann dann entweder (wenn die Greif-Hubvorrichtung selbst noch mit einer X-Achse verbunden ist) an fix montierte Meßgeräte optimal heranfahren, oder das zu vermessende Werkstück kann in Höhe und Winkelposition den - nur in X-Richtung verfahrbaren - Meßgeräten optimal zugewandt werden; und dieses während des Meßvorgangs auch mit wechselnden unterschiedlichen Höhen- und Winkelpositionen.

Des weiteren ist es für die Durchführung der für das automatische Vermessen von Werkstücken notwendigen Arbeitsoperationen besonders vorteilhaft, die Meßebene gegenüber dem konventionellen Verfahren im wahrsten Wortsinn "auf den Kopf zu stellen", daß heißt, die Meßbezugsebene auf der Werkstückoberseite anzuordnen, weil dadurch ein automatisches Heranführen der Werkstücke (und nach Beendigung des Meßvorgangs das Abführen der Werkstücke zur Sortierung oder Klassierung) durch eine einfache, universell nutzbare Transporteinrichtung bis unter die Meßposition möglich wird. So kann z. B. bereits ein einfaches, im Dauerlauf geschaltetes Transportband die verschieden großen, frei aufliegenden Werkstücke gleitend bis unter die Meßposition fördern, wobei sich diese z. B. mittels universeller Schikanen noch selbsttätig in der Transportebene (XY Ebene) orientieren.

Dabei wird, wenn mit einer XY-Meßbezugsebene gearbeitet wird, ein Spannen des Werkstücks erforderlich, bei dem während des Spannvorgangs gleichzeitig mit dem radialen Spannen in X-Richtung eine Bewegung des Werkstücks in Z-Richtung gegen einen Anschlag (Meßbezugsebene) erfolgt, um eine sichere Anlage des Werkstücks an diese Bezugsebene zu gewährleisten. Das geschieht mittels auf dem Prinzip der schiefen Ebene oder des Kniehebels arbeitender Greifvorrichtungen. Die erfindungsgemäße drehbare Hubvorrichtung arbeitet demzufolge mit Greifvorrichtungen wie: Spezialspanndorn oder Spezialspannzange oder Spannprismenfutter oder mit tellerfederartigen Spannkörpern. Es kann aber auch mit der Spannhülsenfläche als Bezugsebene gearbeitet werden, das ist insbesondere dann sinnvoll, wenn ein erst im Meßprozeß hochgenaues Bestimmen der Meßebene bei der Durchführung des Meßverfahrens erforderlich ist.

Grundsätzlich ist die Variabilität der Meßebene selbstverständlich auch bei einer Anordnung der Meßebene unter dem Werkstück und z. B. durch Absenkung der drehbaren Hubvorrichtung erreichbar. Dabei verbleiben alle Vorteile des erfindungsgemäßen Meßverfahrens, nur entfällt dann die beschriebene vorteilhafte Möglichkeit, die zu messenden Werkstücke mit einem ebenso einfachen wie universellen Transportmittel direkt unter die Meßposition fahren zu können.

Diese, und die weiteren Vorteile der erfindungsgemäßen Gestaltung des Meßverfahrens lassen sich am besten anhand eines Ausführungsbeispiels erläutern, bei dem die erfindungsgemäße drehbare Hubvorrichtung mit einer NC-Ansteuerung der Drehachse und einer NC-Ansteuerung der in Z-Richtung wirkenden Lineareinheit und mit einem erfindungsgemäßen Spezialspanndorn als Greifvorrichtung arbeitet.

Die Zeichnungen zeigen:
- Fig. 1: schematisch eine Vorrichtung, bestehend aus Spezialspanndorn mit Dreh- und Hubmöglichkeit über Drehachse und Lineareinheit,
- Fig. 2: schematisch eine zylindrisch geschliffene Spannhülse mit einem Werkstück, bei der die Spannhülsenfläche zur Meßbezugsebene wird und gleichzeitig das Werkstück zentrisch spannt,
- Fig. 3: schematisch das Spannen eines Werkstücks durch eine Spannhülse mit einer Konturlinie, bei der das Werkstück zentrisch und gegen einen Anschlag (Meßebene) gespannt wird,
- Fig. 4: schematisch eine sich aus tellerfederartigen Elementen zusammensetzende Greifvorrichtung in zwei Blöcken, mit entgegengesetzter Lage der tellerfederartigen Elemente, im entspannten Zustand,
- Fig. 5: Greifvorrichtung gemäß Fig. 4 jedoch im gespannten Zustand mit einem Werkstück mit nicht zylindrischer Bohrung.

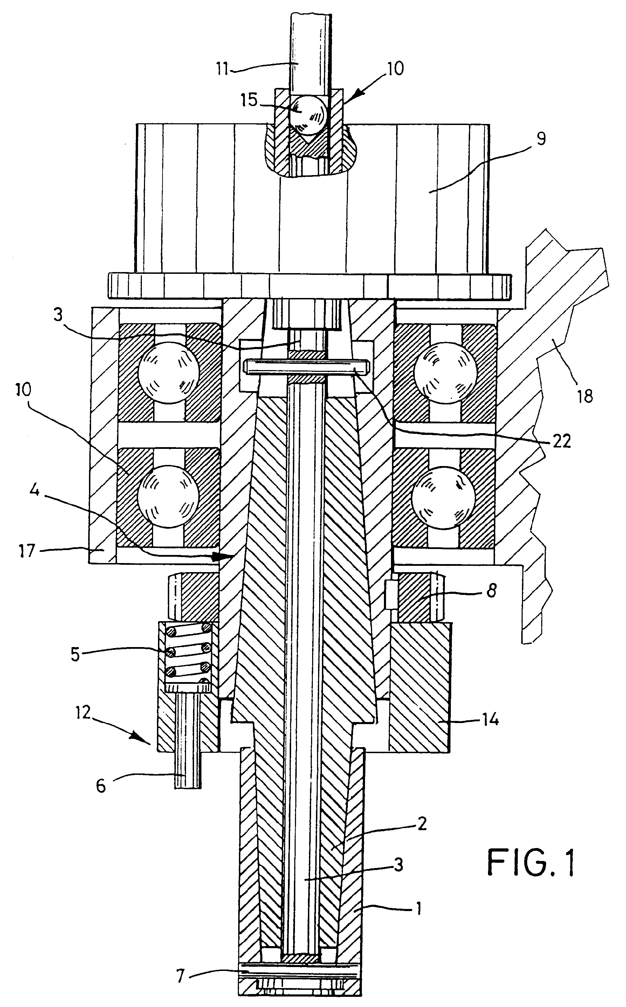

Die in Fig. 1 dargestellte Greif-Hubvorrichtung besteht aus einem Spanndorn mit einer Spannhülse 1, einem Spannkegel 2 und einer Spanndornzugachse 3. Die Spanndornzugachse 3 ist über eine Verdrehsicherung 7 an der Spannhülse 1 festgelegt. Außerdem ist die Spanndornzugachse 3 mittels einer Verdrehsicherung 22, die auch anders, d. h. z. B. gekoppelt mit einer pneumatischen Spanneinheit 9 an einer Hubachse 4 angeordnet, so daß beim Spannen der Greif-Hubvorrichtung mittels der Spanndornzugachse 3 und der pneumatischen Spanneinheit 9 nur noch eine axiale Bewegung der Spannhülse 1 auf dem Spannkegel 2 möglich ist.

Und damit kann die ganze Greif-Hubvorrichtung über ein Zahnrad 8 von einem NC gesteuerten Antrieb, der in der Zeichnung nicht dargestellt ist, in eine beliebige Winkelposition gedreht und über das Hubgehäuse 17 in Verbindung mit einer MC gesteuerten Lineareinheit 18 in eine beliebig hohe Meßebene gebracht werden.

Um diese Vorrichtung zum statischen, insbesondere aber zum dynamischen Vermessen von Werkstücken 19 einsetzen zu können, ist sie mit weiteren Merkmalen versehen.

Die in Fig. 1 dargestellte aus Spannhülse 1 und Spannkegel 2 bestehende Greifvorrichtung ist über die Hubachse 4 und über vorgespannte Lager 10 im Hubgehäuse 17 konzentrisch zur ideellen Drehachse aufgebaut. Die dadurch gegebene Konzentrizität ist aber für Meßgenauigkeiten im » m-Bereich zu ungenau und deshalb unbrauchbar. Mit der Arretierung der Spannhülse 1 über die Verdrehsicherung 7 wird außer der Anbringung eines Präzisionsschliffs auf der Spannhülse 1 im axial vorgespannten Zustand die Möglichkeit einer hochgenauen mechanisch elektronischen Korrektur geschaffen, indem für jede Winkelposition der Abweichungswert ermittelt und als Bezugs- und Basiswert festgehalten wird. Mit Hilfe der MC-Steuerung der Drehachse, mit Hilfe induktiver Meßgeräte und mit Hilfe eines Linearisierungsprogramms des Computers kann die Greif-Hubvorrichtung jetzt mechanisch elektronisch exakt genullt werden; und gleiches gilt sodann für ein auf dieser Vorrichtung zentriertes und festgespanntes Werkstück. In der Praxis wird deshalb nur der sogenannte, hochgenaue "Einstellmeister" elektronisch genullt.

Demzufolge können die für die 100 %-Kontrolle von Werkstücken sehr wichtigen dynamischen Messungen, wie das Senkrechtstehen der Werkstückachse zu den Planflächen, die Planflächenparallelität und die Konzentrizität der Durchmesser durch Drehen der Greif-Hubvorrichtung - nunmehr ohne hohen Programmierungsaufwand für Meßprogramme - sehr einfach und universell anwendbar, durchgeführt werden.

Des weiteren kann der aus Spannhülse 1, Spannkegel 2 und Spanndornzugachse 3 bestehende Spanndorn zusätzlich zu den bereits genannten Funktionen des Greifens, des Zentrierens und des Positionierens eines Werkstücks 19 gegen die Meßbezugsebene auch selbst als Meßgerät für das indirekte Vermessen einer Bohrung genutzt werden. Dies ist ein bedeutender Vorteil, weil dadurch für die meisten Meßaufgaben ein Innen- und zugleich ein Außenvermessen des Werkstücks in nur einer Meßstation möglich wird.

Dazu sind vier weitere erfindungsgemäße Merkmale wichtig. Zum einen muß der oben angeführte Dimensions- oder Passungsschliff der Spannhülse 1 so angebracht werden, daß der Meßbereich - der ca. 1/10 des Spannbereichs ausmacht - die optimale Anlage von Spannhülse 1 auf Spannkegel 2 sicherstellt. Dazu wird die Spannhülse 1 bei axial exakt definierter Vorspannung geschliffen.

Zum zweiten muß der Schliff eine exakte Form aufweisen, dafür kommen je nach Werkstück 19 und Meßaufgabe zwei Formen in Frage:

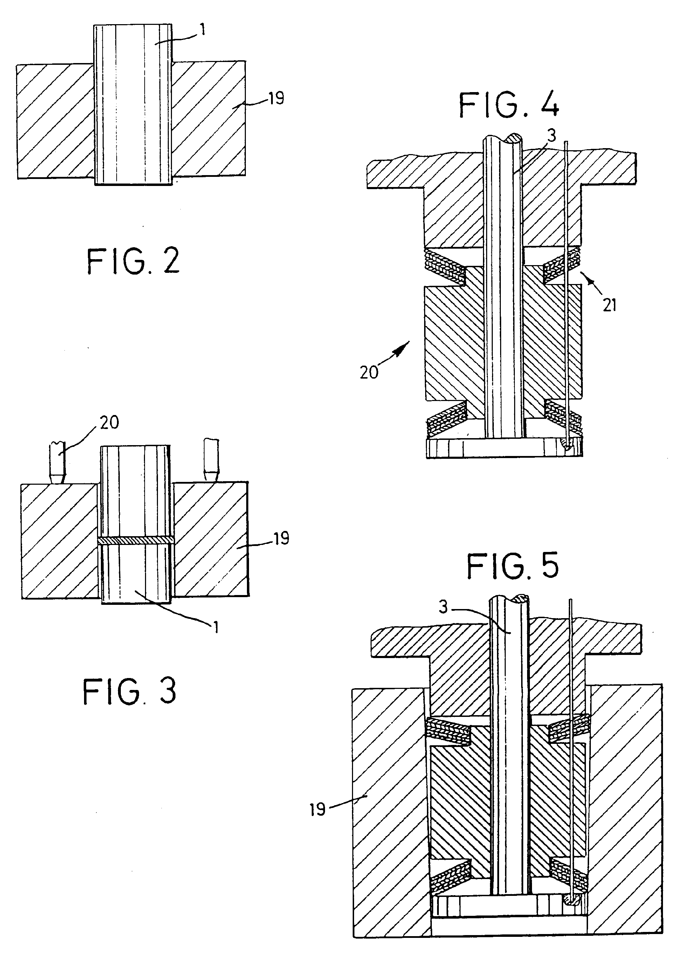

Erstens, die in Fig. 2 dargestellte, zylindrische Form. Dabei wird die zylindrische Form selbst zur eindeutigen Meßebene. Zweitens, die in Fig. 3 dargestellte Konturlinienform; dabei dient die Konturlinie der Werkstückzentrierung und der Anschlag wird zur Meßebene. Im ersteren Falle (Fig. 2) erfolgt keine feste Positionierung des Werkstücks 19 in Z-Richtung auf dem Spanndorn und die Werkstückhöhenmaße müssen z. B. als Differenzmaße gemessen werden. Aber mit dieser Ausbildung des Formschliffs wird andererseits die Ermittlung des Kleinstdurchmessers einer Bohrung optimal möglich.

Zum dritten muß die Spanndornzugachse 3 über die Drehachse des Zahnrads 8 und die Hubachse 4 hinaus verlängert werden.

Viertens kann - wegen der zum dynamischen Messen notwendigen Drehbewegung des Spezialspanndorns - die axiale Bewegung der Spanndornzugachse 3 beim Spannen des Werkstücks 19 - als Maß für die Innenbohrung - nicht unmittelbar auf ein Meßgerät 11 übertragen werden. Erfindungsgemäß wird das entkoppelte Messen durch eine zwischen das Ende der Spanndornzugachse 3 und dem Meßgerät 11 positionierte Kugel 15 erreicht; und dadurch läßt sich das Meßgerät 11 zur Erhöhung der Meßgenauigkeit unabhängig von der Drehachse an der Hubvorrichtung positionieren.

Der Vorteil, daß mit diesem Meßverfahren ein - sonst nicht mögliches - gleichzeitiges Vermessen von Innen- und Außenmaßen eines Werkstücks 19 auf nur einer Meßstation erreicht werden kann, wird noch unterstützt durch die hohe Qualität dieser Messung. Eine so durchgeführte indirekte Messung einer Werkstückbohrung weist - infolge Übersetzung der Bohrungsmaße über die "schiefe Ebene" des Spanndorns - für alle produzierten und in der Werkstatt gemessenen Werkstücke so hohe Meßwiederholgenauigkeiten auf, wie sie sonst nur bei Labormeßmaschinen im Labor bekannt geworden sind. Dabei ist es weiterhin sehr vorteilhaft, daß diese Meßgenauigkeit mit einem - selbst für den Langzeitbetrieb - äußerst robusten Meßmittel erzielt wird.

Eine Alternative zum Einsatz des Spanndorns (Spannzange, Spannprismenfutter) basierend auf dem Prinzip der "schiefen Ebene", ist der Einsatz einer durch tellerfederartige Elemente gebildeten Greifvorrichtung 20, basierend auf dem Prinzip des Kniehebels, zum Greifen, Zentrieren und Positionieren des Werkstücks gegen die Meßbezugsebene (Fig. 4 und 5).

Mit dieser Greifvorrichtung 20, die ebenfalls verdrehgesichert und danach im vorgespannten Zustand geschliffen ist, sind aber sowohl für das indirekte statische Vermessen der Bohrung (oder des Außendurchmessers) eines Werkstücks 19 als auch für das dynamische Vermessen eines Werkstücks andere und zum Teil bessere und aussagefähigere Meßwerte als mittels Spanndorn, Spannzange, Spannprismenfutter, erzielbar.
Das gilt vor allem für Sondermeßaufgaben.

Die in Fig. 4 als entspannt, und in der Fig. 5 als gespannt, mit einem Werkstück 19 dargestellte Greifvorrichtung 20, bei der tellerfederartige Elemente 21 nicht gleichgerichtet, sondern in zwei Blöcke entgegengesetzt gerichtet, aufgeteilt sind, besitzt z. B. den großen Vorteil, daß auch Werkstücke mit variierenden, nicht zylindrischen Bohrungen (und geringer Planfläche) absolut achszentrisch gespannt werden können.

Diese Greifvorrichtung 20 würde bei gleichgerichtet, geschichteten tellerfederartigen Elementen ebenfalls - wie bei Spanndorn, Spannzange, Spannprismenfutter - eine Bewegung in zwei Richtungen machen, radial in X-Richtung für das Spannklemmen des Werkstücks 19 und in Z-Richtung, um die Anlage des Werkstücks an den Anschlag (Meßebene) sicherzustellen.

Schließlich kommt der auch in Fig. 1 dargestellten Vorrichtung zur Werkstückdrehorientierung eine besondere Bedeutung zu.

In Verbindung mit der drehbaren Hubvorrichtung zum Vermessen von Werkstücken kann die Werkstückdrehorientierungsvorrichtung äußerst einfach gestaltet werden, weil sie die bereits gegebene Drehachse jetzt zur Werkstückorientierung nutzen kann.

Sie besteht aus einem auf der Hubachse 4 befestigten Ringkörper 14, der in axialer Richtung eine zusätzliche Bohrung aufweist, in der z. B. ein Positionierstift 6 oder eine Klinke gelagert ist, der entweder durch eine Feder 5 beaufschlagt ist oder aufgrund der Schwerkraft nach unten fällt und über den unteren Rand des Ringkörpers 14 vorsteht.

Dieser Positionierstift 6 schiebt sich beim Herunterfahren der Greif-Hubvorrichtung mittels der Lineareinheit der Hubvorrichtung - während des Eintauchens der entspannten Spannhülse 1 in die Werkstückbohrung - beim Auftreffen auf das zu messende Werkstück in axialer Richtung zunächst zurück; sodann dreht sich die Spanndornzugachse 3 um den notwendigen Drehwinkel (bei nur einem zu messenden Merkmal z. B. um ca. 360 Grad) und schiebt sich, bzw. fällt sodann in die zu messende Sonderform. Bei Umkehr der Drehrichtung der Hubachse 4 nimmt der Positionierstift 6 das Werkstück 19 jetzt in die 0-Grad-Position mit; damit ist es in Drehrichtung exakt orientiert und zum Greifen vorbereitet.

Erst nach dieser Orientierung und dem Greifen sowie dem "frei in den Raum stellen" können die asymmetrischen Formen an Werkstücken optimal vermessen werden.

Eine derartig gestaltete mit den verschiedenen Merkmalen versehene, sogenannte drehbare Hubvorrichtung mit Spezialspanndorn, mit NC gesteuerter Drehachse und NC gesteuerter Lineareinheit und Werkstückpositioniervorrichtung wird so zu einer universell einsetzbaren Kombinationseinheit.

Sie gestattet z. B. die Durchführung aller für das Vermessen von mit einer Bohrung versehenen, auch nicht rotationssymmetrischen, Werkstücken erforderlichen Arbeitsgänge wie folgt:
1. Das Werkstück 19 wird auf einem Transportband frei aufliegend, z. B. durch Schikanen und/oder Anschlag unter der Meßposition vororientiert und in Drehrichtung lagegerecht orientiert, indem der ungespannte Spanndorn in die Bohrung des Werkstückes 19 lose eintaucht, um dann mit dem Positionierstift 6 eine mitnehmende Drehbewegung durchzuführen und so das Werkstück 19 auch in Drehrichtung exakt zu positionieren.
2. Das Werkstück 19 wird durch den Spanndorn ergriffen und gleichzeitig zentrisch durch die Spezialkonturlinie der Spannhülse 1 mit Relativbewegung in der Z-Richtung gegen die Meßebene festgespannt.
3. Das Werkstück 19 wird mit der Lineareinheit 18 in die gewünschten Meßpositionen gehoben.
4. Das Werkstück 19 wird über die Spanndornzugachse 3 und das damit gekoppelte Meßgerät 11 innen vermessen.
5. Das Werkstück 19 wird über heranfahrende Meßgeräte außen statisch vermessen und/oder
6. das Werkstück wird über einen NC gesteuerten Drehantrieb entweder in die Position z. B. 0 Grad, 90 Grad, 180 Grad und 270 Grad gebracht oder auch kontinuierlich von 0 Grad bis auf ca. 360 Grad gefahren und dabei über nur in X-Richtung herangefahrene Meßgeräte in Höhe und Durchmesser außen dynamisch vermessen.
   Damit wird sowohl die Konzentrizität wie auch das Senkrechtstehen der Werkstückachse zur Planfläche (Planschlag) und die Planparallelität der Flächen gemessen.
7. Anschließend wird die Greifvorrichtung entspannt und das Werkstück von der Hubvorrichtung wieder auf das Transportband, z. B. zur anschließenden Sortierung oder Klassierung abgegeben.

## Patentansprüche

1. Verfahren zum Messen von Werkstücken, die in einer Transportebene bewegt werden, dadurch gekennzeichnet,
a) daß das Werkstück in der Transportebene mittels einer von einer drehbaren Hubvorrichtung getragenenen Greifvorrichtung ergriffen, in eine eindeutig definierte Position relativ zur Hubvorrichtung gebracht und drehfest bezüglich der Hubvorrichtung angeordnet wird, wobei die Hubvorrichtung so ausgebildet ist, daß das von der Greifvorrichtung ergriffene Werkstück gehoben und gesenkt sowie zusammen mit der Hubvorrichtung um die Hubachse gedreht werden kann,
b) daß das Werkstück von der Hubvorrichtung aus der Transportebene in eine vorgegebene, frei im Raum befindliche Position gebracht wird,
c) daß ein oder mehrere Meßgeräte an das Werkstück in der genannten Parition herangefahren werden und das Werkstück über die herangefahrenen Meßgeräte außen und/oder innen in Höhen und Durchmessern vermessen wird und
d) daß anschließend das Werkstück in die Transportebene zurückgegeben wird.

2. Verfahren nach Anspruch 1, dadurch gekennzeichnet, daß die Drehbeweung der Hubvorrichtung und des Werkstückes gesteuert erfolgt.

3. Verfahren nach Anspruch 1 oder 2, dadurch gekennzeichnet, daß das Werkstück von der Greifvorrichtung fest in eine eindeutig definierte Position gebracht wird.

4. Verfahren nach einem oder mehreren der vorhergehenden Ansprüche, dadurch gekennzeichnet, daß die Greifvorrichtung der Hubvorrichtung auf dem Prinzip der schiefen Ebene basiert und sich das Werkstück bei Betätigen der Greifvorrichtung in mindestens zwei Richtungen, nämlich in der Z-Richtung, die ein Anziehen und in der X-Richtung, die ein Klemmen bedeutet, bewegt.

5. Verfahren nach einem oder mehreren der vorhergehenden Ansprüche 1 bis 3, dadurch gekennzeichnet, daß die Greifvorrichtung der Hubvorrichtung auf dem Prinzip des Kniehebels basiert und sich das Werkstück bei Betätigen der Greifvorrichtung in mindestens zwei Richtungen bewegt, nämlich in der Z-Richtung, die ein Anziehen bedeutet und in der X-Richtung, die ein Klemmen bedeutet.

6. Verfahren nach einem oder mehreren der vorhergehenden Ansprüche, dadurch gekennzeichnet, daß das Werkstück über einen in eine Werkstückbohrung eintauchenden Spanndorn oder eine einen Zapfen ergreifende Spannzange bzw. Spannprismenfutter ergriffen wird, wobei die Größe der in Z-Richtung erfolgenden Bewegung als Meßgröße für die Bohrung oder den Zapfen dient.

7. Verfahren nach einem oder mehreren der vorhergehenden Ansprüche, dadurch gekennzeichnet, daß das Werkstück in der Transportebene, z. B. auf einem Transportband, vororientiert wird.

8. Greif-Hubvorrichtung zur Verwendung bei der Durchführung des Meßverfahrens nach einem der Ansprüche 1 bis 7, dadurch gekennzeichnet,
- daß eine Greifvorrichtung vorgesehen ist, die von einer um die Hubachse (4) drehbaren, mit einem gesteuerten Antrieb verbundenen Hubvorrichtung getragen ist,
- daß die Greifvorrichtung als Spanndorn ausgebildet ist, der aus einer Spannhülse (1), einem Spannkegel (2) und einer Spanndornzugachse (3) besteht und
- daß die Spannhülse (1) drehfest mit der Spanndornzugachse (3) und die Spanndornzugachse (3) drehfest mit der Hubachse (4) gekoppelt ist.

9. Greif-Hubvorrichtung nach Anspruch 8, dadurch gekennzeichnet, daß die Spannhülse (1) in ihrer radial festgelegten Lage zum Spannkegel (2) mit axial definierter Vorspannung durch Oberflächenbearbeitung exakt auf den Meßbereich abgestimmt, dimensioniert ist.

10. Greif-Hubvorrichtung nach Anspruch 8 und 9, dadurch gekennzeichnet, daß die Spannhülse (1) eine Konturlinie aufweist.

11. Greif-Hubvorrichtung nach Anspruch 8 oder 9, dadurch gekennzeichnet, daß die Spannhülse (1) zylindrisch ausgebildet ist.

12. Greif-Hubvorrichtung nach einem oder mehreren der vorhergehenden Ansprüche 8 bis 11, dadurch gekennzeichnet, daß die Spanndornzugachse (3) an ihrem der Spannhülse (1) abgewandten Ende einen Meßkopf (10) aufweist, der mit einem die Längenbewegung der Spanndornzugachse (3) messenden Meßgerät (11) zusammenwirkt.

13. Greif-Hubvorrichtung nach Anspruch 12, dadurch gekennzeichnet, daß das Meßgerät (11) ortsfest, also unabhängig von der Greifvorrichtung, montiert ist.

14. Greif-Hubvorrichtung nach einem oder mehreren der vorhergehenden Ansprüche 8 bis 13, dadurch gekennzeichnet, daß sie als Zusatz eine Werkstückdrehorientierungsvorrichtung (12) hat, die einen Positionierstift (6) od. dgl. aufweist, wobei die Werkstückdrehorientierungsvorrichtung (12) aus einem drehfest auf der Hubachse (4) gelagerten Ringkörper (14) besteht.

15. Greif-Hubvorrichtung nach Anspruch 14, dadurch gekennzeichnet, daß der Positionierstift (6) oder dergleichen in axialer Richtung zur Spanndornzugachse (3) beweglich ist.

16. Greif-Hubvorrichtung nach einem oder mehreren der vorhergehenden Vorrichtungsanprüche, insbesondere zur Durchführung des Meßverfahrens nach Anspruch 1, dadurch gekennzeichnet, daß ein aus gleichgerichtet zusammengesetzten tellerfederartigen Elementen gebildeter Spannkörper eingesetzt ist, wobei die Größe der in Achsrichtung erfolgenden Bewegung als Meßgröße dient.

17. Greif-Hubvorrichtung nach einem oder mehreren der vorhergehenden Vorrichtungsansprüche, dadurch gekennzeichnet, daß ein aus tellerfederartigen Elementen gebildeter Spannkörper in zwei Blöcke aufgeteilt ist, deren tellerfederartige Elemente entgegengesetzt geneigt sind und insbesondere zur achszentrischen Ausrichtung von Werkstücken mit variierender, nicht zylindrischer Bohrung oder variierendem, nicht zylindrischem Zapfen (auch Wellenende) dienen.

## Claims

1. A process for measuring workpieces being moved in a conveying plane, characterized in that
a) the workpiece is gripped in the conveying plane by means of a gripping device carried by a rotatable lifting device, brought into a clearly defined position relative to the lifting device and arranged for rotation with respect to the lifting device, the lifting device being so constructed that the workpiece gripped by the gripping device can be raised and lowered as well as rotated together with the lifting device about the lifting shaft,
b) the workpiece is brought by the lifting device out of the conveying plane into a predetermined position located freely in space,
c) one measuring apparatus or a plurality thereof is/are conveyed towards the workpiece in the above-mentioned position and the external and/or internal height and diameter of the workpiece are measured by said measuring apparatus(es) and
d) the workpiece is subsequently returned to the conveying plane.

2. A process according to claim 1, characterized in that the rotary motion of the lifting device and the workpiece is effected controlledly.

3. A process according to claim 1 or claim 2, characterized in that the workpiece is brought by the gripping device firmly into a clearly defined position.

4. A process according to any one of the preceding claims, characterized in that the gripping device of the lifting device is based on the oblique plane principle and the workpiece moves in at least two directions, i.e. the Z direction, indicating tightening, and the X direction, indicating clamping, upon actuation of the gripping device.

5. A process according to any one of preceding claims 1 to 3, characterized in that the gripping device of the lifting device is based on the articulated lever principle and the workpiece moves in at least two directions, i.e. the Z direction, indicating tightening, and the X direction, indicating clamping, upon actuation of the gripping device.

6. A process according to any one of the preceding claims, characterized in that the workpiece is gripped by a clamping spindle entering a workpiece bore or a collet chuck or prismatic chuck gripping a peg, the size of the movement in the Z direction serving as the measurable variable for the bore or peg.

7. A process according to any one of the preceeding claims, characterized in that the workpiece is preoriented in the conveying plane, e.g. on a conveyor belt.

8. A gripping and lifting device for use in carrying out the measuring process according to any one of claims 1 to 7, characterized in that
- a gripping device is provided which is carried by a lifting device rotatable about the lifting shaft (4) and connected with a controlled drive,
- the gripping device is constructed as a clamping spindle, which consists of a clamping sleeve (1), a clamping cone (2) and a clamping spindle tension shaft (3) and
- the clamping sleeve (1) is coupled for rotation with the clamping spindle tension shaft (3) and the clamping spindle tension shaft (3) is coupled for rotation with the lifting shaft (4).

9. A gripping and lifting device according to claim 8, characterized in that, in its radially fixed position with respect to the clamping cone (2), the clamping sleeve (1) is dimensioned with axially defined bias by surface working to conform precisely to the measuring range.

10. A gripping and lifting device according to claim 8 and claim 9, characterized in that the clamping sleeve (1) comprises a contour line.

11. A gripping and lifting device according to claim 8 or claim 9, characterized in that the clamping sleeve (1) is of cylindrical construction.

12. A gripping and lifting device according to any one of preceding claims 8 to 11, characterized in that the clamping spindle tension shaft (3) comprises a measuring head (10) at its end remote from the clamping sleeve (1), which measuring head (10) cooperates with a measuring apparatus (11) measuring the longitudinal movement of the clamping spindle tension shaft (3).

13. A gripping and lifting device according to claim 12, characterized in that the measuring apparatus (11) is mounted stationarily, i.e. independently of the gripping device.

14. A gripping and lifting device according to any one of preceding claims 8 to 13, characterized in that it additionally comprises a workpiece rotary orientation device (12), which has a positioning pin (6) or the like, the workpiece rotary orientation device (12) consisting of an annular member (14) mounted for rotation on the lifting shaft (4).

15. A gripping and lifting device according to claim 14, characterized in that the positioning pin (6) or the like is movable in the axial direction with respect to the clamping spindle tension shaft (3).

16. A gripping and lifting device according to any one of the preceding apparatus claims, especially for implementing the measurring process according to claim 1, characterized in that a clamping member formed of unidirectionally assembled disk spring-type elements is used, the size of the movement effected in the axial direction serving as a measurable variable.

17. A gripping and lifting device according to any one of the preceding apparatus claims, characterized in that a clamping member formed of disk spring-type elements is divided into two blocks, whose disk spring-type elements are inclined opposite each other and especially serve to orient workpieces axially centeredly with varying, non-cylindrical bores or varying, non-cylindrical pegs (also shaft ends).

## Revendications

1. Procédé pour la mesure de pièces d'oeuvre qui sont déplacées dans un plan de transport, caractérisé en ce que
a) la pièce d'oeuvre est saisie dans le plan de transport au moyen d'un dispositif de préhension porté par un dispositif de levage rotatif, amenée dans une position clairement définie par rapport au dispositif de levage et disposée de manière solidaire en rotation par rapport au dispositif de levage, le dispositif de levage étant conçu de telle sorte que la pièce d'oeuvre saisie par le dispositif de préhension puisse être soulevée et abaissée ainsi que tournée avec le dispositif de levage autour de l'axe de levage,
b) en ce que la pièce d'oeuvre est amenée par le dispositif de levage à partir du plan de transport dans une position prédéterminée libre dans l'espace,
c) en ce qu'un ou plusieurs appareils de mesure sont approchés de la pièce d'oeuvre dans ladite position et la pièce d'oeuvre est mesurée par les appareils de mesure approchés à l'extérieur et/ou à l'intérieur en hauteur et en diamètre et
d) en ce que la pièce d'oeuvre est ensuite replacée dans le plan de transport.

2. Procédé selon la revendication 1, caractérisé en ce que le mouvement de rotation du dispositif de levage et de la pièce d'oeuvre est contrôlé.

3. Procédé selon la revendication 1 ou 2, caractérisé en ce que la pièce d'oeuvre est amenée de manière fixe par le dispositif de préhension dans une position clairement définie.

4. Procédé selon l'une ou l'ensemble des revendications précédentes, caractérisé en ce que le dispositif de préhension du dispositif de levage repose sur le principe du plan incliné et la pièce d'oeuvre se déplace lors de l'actionnement du dispositif de préhension dans au moins deux directions, à savoir dans la direction des z, qui signifie une attraction, et dans la direction des x, qui signifie un serrage.

5. Procédé selon l'une ou l'ensemble des revendications 1 à 3, caractérisé en ce que le dispositif de préhension du dispositif de levage repose sur le principe du levier à genouillère et la pièce d'oeuvre se déplace lors de l'actionnement du dispositif de préhension dans au moins deux directions, à savoir dans la direction des z, qui signifie une attraction, et dans la direction des x, qui signifie un serrage.

6. Procédé selon l'une ou l'ensemble des revendications précédentes, caractérisé en ce que la pièce d'oeuvre est saisie par un mandrin de serrage pénétrant dans un alésage de la pièce d'oeuvre ou une pince de serrage ou une garniture prismatique de serrage saisissant une goupille, la grandeur du déplacement dans la direction des z servant de grandeur de mesure pour l'alésage ou la goupille.

7. Procédé selon l'une ou l'ensemble des revendications précédentes, caractérisé en ce que la pièce d'oeuvre est orientée à l'avance dans le plan de transport, par exemple sur une bande transporteuse.

8. Dispositif de préhension et de levage à utiliser dans la mise en oeuvre du procédé de mesure selon l'une ou l'ensemble des revendications 1 à 7, caractérisé en ce que
- il est prévu un dispositif de préhension qui est porté par un dispositif de levage pouvant effectuer une rotation autour de l'axe de levage (4) et relié à un entraînement contrôlé,
- en ce que le dispositif de préhension est conçu comme un mandrin de serrage, qui se compose d'un manchon de serrage (1), d'un cône de serrage (2) et d'un axe de traction du mandrin de serrage (3), et
- en ce que le manchon de serrage (1) est relié de manière solidaire en rotation à l'axe de traction du mandrin (3) et l'axe de traction du mandrin (3) est relié de manière solidaire en rotation à l'axe de levage (4).

9. Dispositif de préhension et de levage selon la revendication 8, caractérisé en ce que dans sa position fixée dans le sens radial par rapport au cône de serrage (2), le manchon de serrage (1) est dimensionné avec une précontrainte définie dans le sens axial de manière exactement adaptée au domaine de mesure par un traitement de surface.

10. Dispositif de préhension et de levage selon l'une des revendications 8 et 9, caractérisé en ce que le manchon de serrage (1) présente une ligne de contour.

11. Dispositif de préhension et de levage selon la revendication 8 ou 9, caractérisé en ce que le manchon de serrage (1) est de forme cylindrique.

12. Dispositif de préhension et de levage selon l'une ou l'ensemble des revendications 8 à 11 précédentes, caractérisé en ce que l'axe de traction du mandrin (3) présente à son extrémité opposée au manchon de serrage (1) une tête de mesure (10) qui coopère avec un appareil de mesure (11) mesurant le déplacement longitudinal de l'axe de traction du mandrin (3).

13. Dispositif de préhension et de levage selon la revendication 12, caractérisé en ce que l'appareil de mesure (11) est monté de façon stationnaire, donc indépendamment du dispositif de préhension.

14. Dispositif de préhension et de levage selon l'une ou l'ensemble des revendications 8 à 13 précédentes, caractérisé en ce qu'il est complété par un dispositif d'orientation de la pièce d'oeuvre (12), qui présente une tige de positionnement (6) ou similaire, le dispositif d'orientation de la pièce d'oeuvre (12) se composant d'un corps annulaire (14) supporté de manière solidaire en rotation sur l'axe de levage (4).

15. Dispositif de préhension et de levage selon la revendication 14, caractérisé en ce que la tige de positionnement (6) ou similaire est mobile dans le sens axial par rapport à l'axe de traction du mandrin (3).

16. Dispositif de préhension et de levage selon l'une ou l'ensemble des revendications de dispositif précédentes, en particulier pour la mise en oeuvre du procédé de mesure selon la revendication 1, caractérisé en ce qu'un corps de serrage formé d'éléments en forme de rondelles-ressorts réunis avec la même orientation est utilisé, la grandeur du déplacement dans le sens axial servant de grandeur de mesure.

17. Dispositif de préhension et de levage selon l'une ou l'ensemble des revendications de dispositif précédentes, caractérisé en ce qu'un corps de serrage composé d'éléments en forme de rondelles-ressorts est divisé en deux blocs, dont les éléments en forme de rondelles-ressorts sont inclinés dans des directions opposées et servent en particulier à l'orientation centrée sur l'axe de pièces d'oeuvre possédant un alésage variable, non cylindrique ou une goupille variable, non cylindrique (également des extrémités d'arbre).
